# EUROPEAN PATENT SPECIFICATION

(11) **EP 1 547 877 B1**
(45) Date of publication and mention of the grant of the patent: **19.11.2008**
(21) Application number: 04029457.1
(22) Date of filing: 13.12.2004
(51) Int. Cl.: B60R 21/20

(54) **Airbag device**
Airbagvorrichtung
Dispositif d'airbag

(30) Priority: 24.12.2003 JP 2003427240; 08.11.2004 JP 2004323882
(43) Date of publication of application: 29.06.2005
(73) Proprietor: TAKATA CORPORATION, Minato-ku, Tokyo 106-8510 (JP)
(72) Inventor: Hayashi, Shinji, Minato-ku, Tokyo 106-8510 (JP); Kanno, Yuki, Minato-ku, Tokyo 106-8510 (JP)
(74) Representative: Vossius & Partner

(56) References cited:
- PATENT ABSTRACTS OF JAPAN vol. 2003, no. 09, 3 September 2003 (2003-09-03) & JP 2003 137054 A (INOAC CORP), 14 May 2003 (2003-05-14)

## Description

The present invention relates to an airbag device provided for a front passenger seat of an automobile and, more particularly, to an airbag device of a type that a door is opened toward a vehicle cabin with being lifted during deployment of an airbag.

An airbag device for a front passenger seat installed in an automobile comprises an airbag in the folded state, a retainer to which the airbag is mounted; an inflator (gas generator) for inflating the airbag, and a lid or a door portion of an instrument panel disposed in front of the retainer.

As the inflator generates gas, the airbag starts to be inflated and the lid or the door portion of the instrument panel is torn along tear lines and is thus opened with being pressed by the airbag so that the airbag is deployed into a vehicle cabin, thereby protecting an occupant.

JP-A- 2003-137054 (Document D1) discloses an airbag device in which a door portion of an instrument panel is structured to be opened with being liftedtoward inside of a vehicle cabin in order to smoothly open the door portion of the instrument panel during the inflation of the airbag.

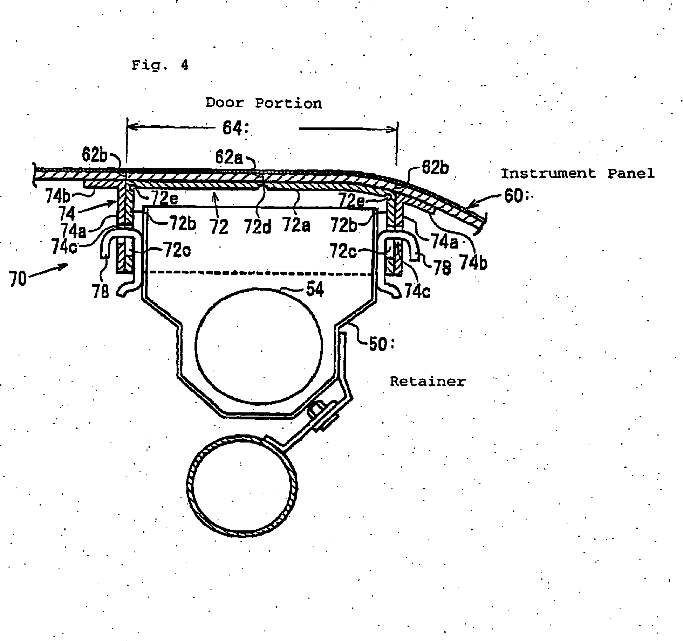

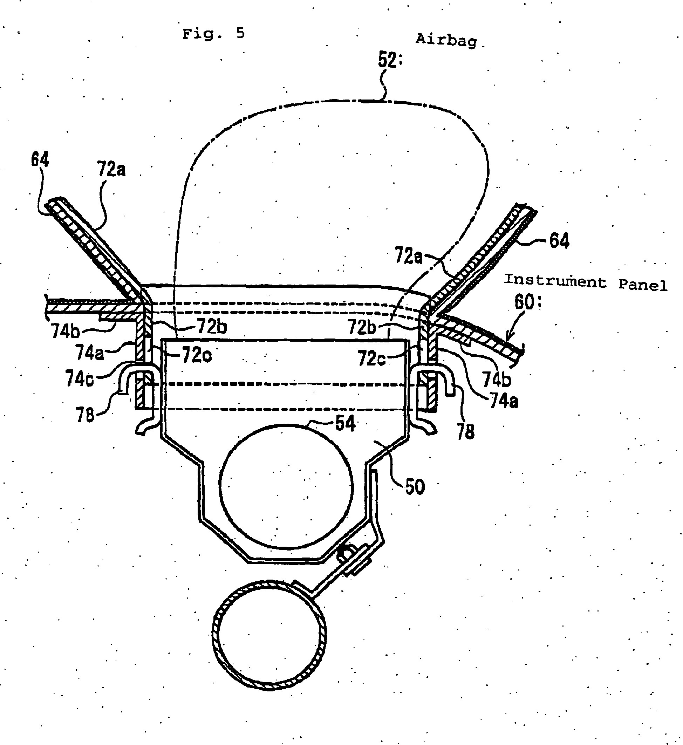

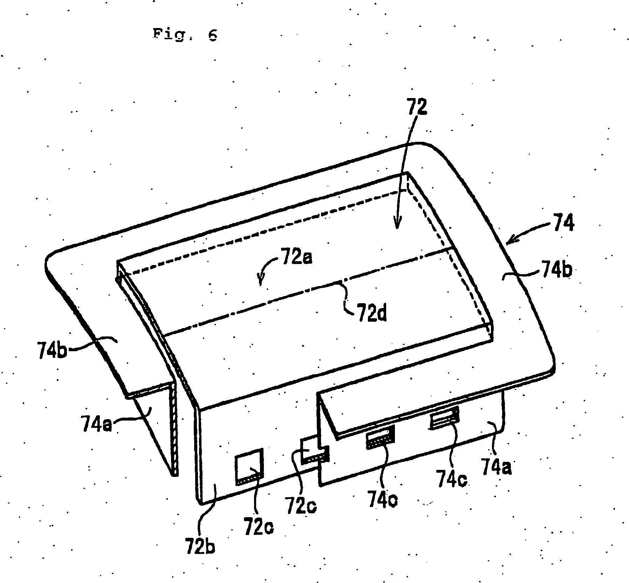

Fig. 4 is a sectional view of an airbag device of the aforementioned publication, Fig. 5 is a sectional view thereof in operation, and Fig. 6 is a perspective view of a door frame.

As shown in Fig. 4, an airbag 52 (Fig. 5) is folded and accommodated in a retainer 50 having a container-like shape with an open top. The airbag 52 is inflatable by means of an inflator 54.

The upper side of the retainer 50 is covered by an instrument panel 60. The instrument panel 60 is provided with tear lines 62a, 62b, consisting of grooves. The tear line 62b is formed along the upper periphery of the retainer 50 to extend round. A portion surrounded by this round tear line 62b is a door portion 64. The tear line 62a is formed to extend the middle of the door portion 64 longitudinally.

Disposed on the back of the instrument panel 60 is a door frame 70 which comprises a door frame movable member 72 and a door flame fixed member 74. The door frame fixed member 74 is a rectangular frame. The door frame movable member 72 is fitted slidably on the inner surface of the door frame fixed member 74.

The door frame movable member 72 has a backing plate 72a superposing to the door portion 64 of the instrument panel 60 and leg plates 72b as the leg portions extending downwardly, as is seen in the drawing, from the both sides of the backing plate 72a. Formed in the leg plates 72b are hook holes 72c. The backing plate 72a is provided with a tear line 72d at a position satisfying a positional relation that the tear line 72d is aligned with the aforementioned tear line 62a. Hinge chamfers 72e, consisting of grooves, are formed along corners between the backing plate 72a and the leg plates 72b, respectively.

The backing plate 72a is bonded to the back of the door portion 64 of the instrument panel 60 by vibration welding.

The door frame fixed member 74 comprises a leg frame 74a as a rectangular frame-like leg portion extending around the outer periphery of the retainer 50 and a flange portion 74b outwardly projecting from the upper edge of the leg frame 74a. The flange portion 74b is bonded to the peripheral portion of the door portion 64 of the instrument panel 60 by the vibration welding. Formed in the leg frame 74a are hook holes 74c.

J-like hooks 78 fixed to the retainer 50 are inserted into the hook holes 72c and 74c.

As the inflator 54 starts its gas spouting action, as shown in Fig. 5, the door frame movable member 72 is upwardly pressed by the airbag 52 being inflated so as to move upwardly (being lifted). The instrument panel 60 is torn along the tear line 62b so that the door portion 64 is separated from the instrument panel 60 around the door portion 64. The door portion 64 further moves upwardly together with the door frame movable member 72 and is further pressed by the airbag 52, whereby the backing plate 72a and the door portion 64 are torn along the tear line 72d and the tear line 62a, respectively. Therefore, the door portion 64 is divided into two pieces in the rightward and leftward directions so as to open just like a door as shown in Fig. 5, whereby the airbag 52 is inflated into the vehicle cabin.

Since the door portion 64 is separated from the instrument panel 60 around the door portion 64 according to the lift movement, the door portion 64 smoothly opens without being subjected to reaction force due to deformation of the instrument panel 60 around the door portion 64.

In the airbag device of JP-A-2003-137054 shown in Figs. 4-6, the leg frame 74a of the door frame fixed member 74 is high, thus increasing the weight of the door frame fixed member 74 and also increasing the required cost of materials for production.

It is an object of the present invention to reduce the weight and the cost of a door frame of a type having a door frame fixing member and a door frame movable member in which a door portion is opened with the lifting motion of the door frame movable member. This object is achieved with the features of the claims.

An airbag device of the present invention comprises: an interior panel as a part of the inner surface of a vehicle cabin; a door portion which is formed in the interior panel and can open like a door toward the inner side of the vehicle cabin; a retainer which is disposed to face the back of the interior panel; an airbag which is folded and accommodated in the retainer; an inflator for inflating the airbag; and a door frame connecting the retainer and the interior panel, wherein the door frame comprises: a door frame movable member which has a backing plate bonded to the back of said door portion and a leg portion projecting from side edge of the backing plate; and a door frame fixed member which has a flange portion bonded to a peripheral portion around the door portion of the interior panel and a leg portion projecting from the flange portion, wherein the height of the leg portion of the door frame fixed member is smaller than the height of the leg portion of the door frame movable member.

Preferably, the leg portion of said door frame movable member is provided with hook holes and said retainer is provided with hooks which are engaged with the hook holes, and that the height of the leg portion of said door frame fixed member does not reach the hook holes.

Preferably, said interior panel is an instrument panel.

According to the invention it is preferred that said interior panel is a lid of the airbag device, said door frame fixed member is provided with connectors for connecting the door frame fixed member to an instrument panel around the lid, and said connectors restrain the door frame fixed member from moving toward the inner side of the vehicle cabin.

According to the airbag device of the present invention, the height of the leg portion of the door frame fixed member is smaller than the height of the leg portion of the door frame movable member, thus reducing the weight of the door frame fixed member and reducing the production cost.

Also in the airbag device of the present invention, as the inflator starts its gas spouting action, the door frame movable member is upwardly pressed by the airbag being inflated so as to move upwardly (being lifted) so that the door portion is separated from the interior panel around the door portion. The door portion further moves upwardly together with the door frame movable member and opens just like a door, whereby the airbag is inflated into the vehicle cabin. Since the door portion is separated from the interior panel around the door portion by means of the lifting motion, the door portion smoothly open without being subjected to reaction force due to deformation of the interior panel around the door portion.

In the present invention, the leg portion of the door frame movable member is provided with hook holes and the retainer is provided with hooks which are engaged with the hook holes and the height of the leg portion of the door frame fixed member is structured not to reach the hook holes. This structure allows the simultaneous molding of the door frame movable member and the door frame fixed member by using a single mold.

In the present invention, the vehicle cabin side of the retainer may be covered by an instrument panel. In this case, the door portion is formed in the instrument panel. The vehicle cabin side of the retainer may be covered by a lid. In this case, the door portion is formed in the lid.

In case that the retainer is covered by the lid, it is preferable that the door frame fixed member is provided with connectors for connecting the door frame fixed member to an instrument panel around the lid and the connectors restrain the door frame fixed member from moving toward the inner side of the vehicle cabin. This structure prevents the lid per se from floating relative to the instrument panel even when the door portion is pressed upwardly by the door frame movable member during the inflation of the airbag. Thus, pressing force from the door frame movable member is concentrated on the door portion, whereby the door portion is smoothly separated from the peripheral portion of the lid.

Hereinafter, embodiments of the present invention will be described with reference to the attached drawings.
Fig. 1 is a sectional view of an airbag device according to an embodiment.
Fig. 2 is a sectional view of the airbag device of Fig. 1 in operation.
Fig. 3 is a perspective view of a door frame of the airbag device of Fig. 1.
Fig. 4 is a sectional view of a conventional airbag device.
Fig. 5 is a sectional view of the airbag device of Fig. 4 in operation.
Fig. 6 is a perspective view showing a door frame of the airbag device of Fig. 4.
Fig. 7 is a sectional view of an airbag device according to another embodiment.
Fig. 8 is a sectional view of the airbag device of Fig. 7 in operation.
Fig. 9 is an exploded perspective view of a lid connector of the airbag device of Fig. 7.

The airbag device is an airbag device for a front passenger seat installed in an instrument panel and comprises a retainer 10 having a container-like shape with an open top, an airbag 12 folded and accommodated in the retainer 10, and an inflator 14 so that the airbag 12 is inflatable by means of the inflator 14. The airbag 12 is mounted to the retainer 10 by a mounting plate 16.

The upper side of the retainer 10 is covered by an instrument panel 20. The instrument panel 20 is provided with tear lines 22a, 22b, consisting of grooves. The tear line 22b is formed along the upper periphery of the retainer 10 to extend round. A portion surrounded by this round tear line 22b is a door portion 24. The tear line 22a is formed to extend the middle of the door portion 24 longitudinally.

Disposed on the back of the instrument panel 20 is a door frame 30 which comprises a door flame movable member 32 and a door flame fixed member 34. The door frame fixed member 34 is a rectangular frame. The door frame movable member 32 is fitted slidably on the inner surface of the door frame fixed member 34.

The door frame movable member 32 has a leg frame 32b as a rectangular frame-like leg portion and tongue-like backing plates 32a, 32a extending from a pair of longitudinal sides of the leg frame 32b in the direction getting closer to each other. The edges (as the ends in the projecting direction) of the backing plates 32a, 32a face each other with a slight space (slit 32d) therebetween. The backing plates 32a, 32a are bonded to the back of the door portion 24 of the instrument panel 20 by vibration welding. The slit 32d is formed in such a manner as to be aligned with the tear line 22a.

The leg frame 32b is provided with hook holes 32c. The hook holes 32c are long in the moving direction of the door frame movable member 32 (that is, the direction perpendicular to the back of the instrument panel 20). In this embodiment, each hook hole 32c is provided with a partition bar 32f on the way of the moving direction of the door frame movable member 32. Hinge chamfers 32e, consisting of grooves, are formed along corners between the backing plates 32a and the leg frame 32b, respectively.

The door frame fixed member 34 comprises a leg frame 34a as a rectangular frame-like portion extending round the outer periphery of the retainer 10 and a flange portion 34b outwardly projecting from the upper edge of the leg frame 34a. The flange portion 34b is bonded to the peripheral portion around the door portion 24 of the instrument panel 20 by the vibration welding. The height of the leg frame 34a is smaller than that of the leg frame 32b of the aforementioned door frame movable member 32 so that the lower end of the leg frame 34a does not reach the aforementioned hook holes 32c.

J-like hooks 38 fixed to the retainer 10 are inserted into the aforementioned hook holes 32c.

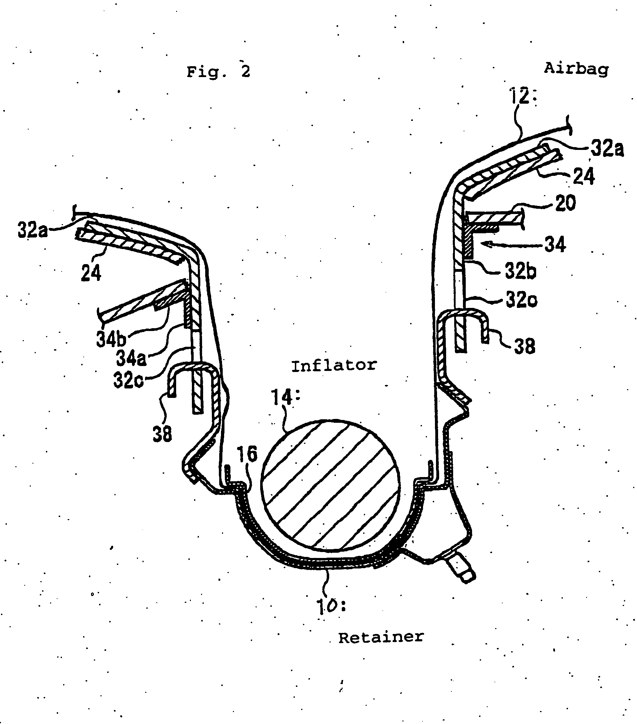

As the inflator 14 starts its gas spouting action, as shown in Fig. 2, the door frame movable member 32 is upwardly pressed by the airbag 12 being inflated so as to move upwardly (being lifted). During the lifting motion of the door frame movable member 32, the hooks 38 move downwardly, as is seen in the drawing, relative to the door frame movable member 32 within the hook holes 32c so as to deform or break the aforementioned partition bars 32f. The instrument panel 20 is torn along the tear line 22b so that the door portion 24 is separated from the instrument panel 20 around the door portion 24. The door portion 24 further moves upwardly together with the door frame movable member 32 and is further pressed by the airbag 12, whereby the door portion 24 is torn along the tear line 22a. Therefore, the door portion 24 and the backing plates 32a, 32a are divided into two pieces in the rightward and leftward directions, as is seen in Fig. 2, so as to open just like a door, whereby the airbag 12 is inflated into the vehicle cabin.

Since the door portion 24 is separated from the instrument panel 20 around the door portion 24 by means of the lifting motion, the door portion 24 smoothly open without being subjected to reaction force due to deformation of the instrument panel 20 around the door portion 24.

Since, according to the airbag device, the height of the leg frame 34a as the leg portion of the door frame fixed member 34 is smaller than that of the conventional example shown in Figs. 4-6, the weight of the door frame fixed member 34 is smaller and the production cost is lower than those of the conventional example. In this embodiment, the leg frame 34a of the door frame fixed member 34 does not reach the hook holes 32c. This allows the simultaneous molding of the door frame movable member 32 and the door frame fixed member 34 by using a single mold.

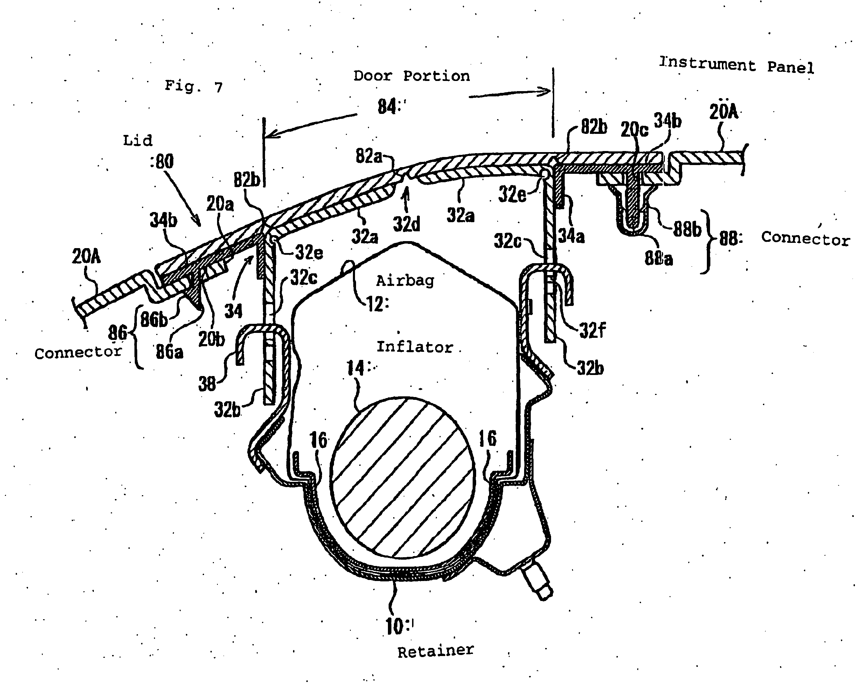

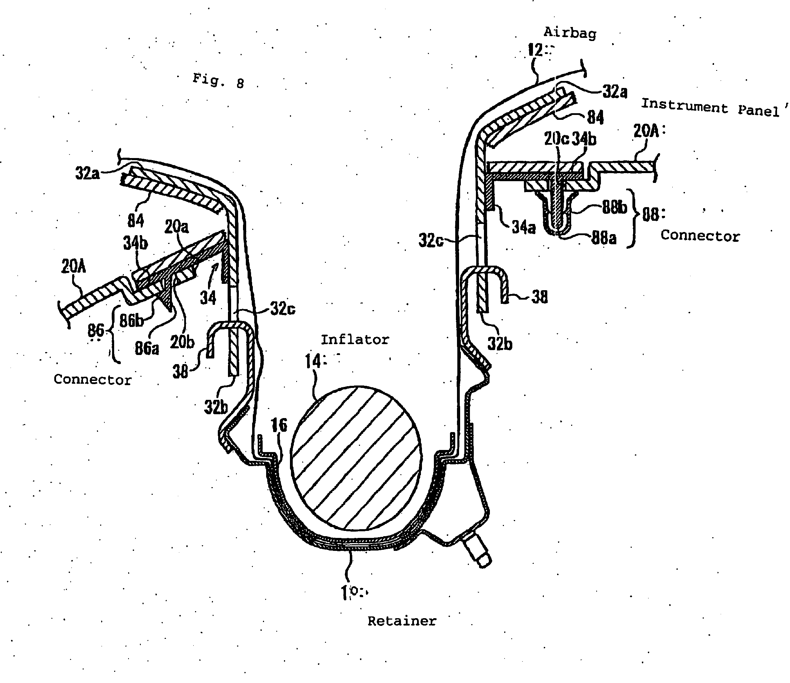

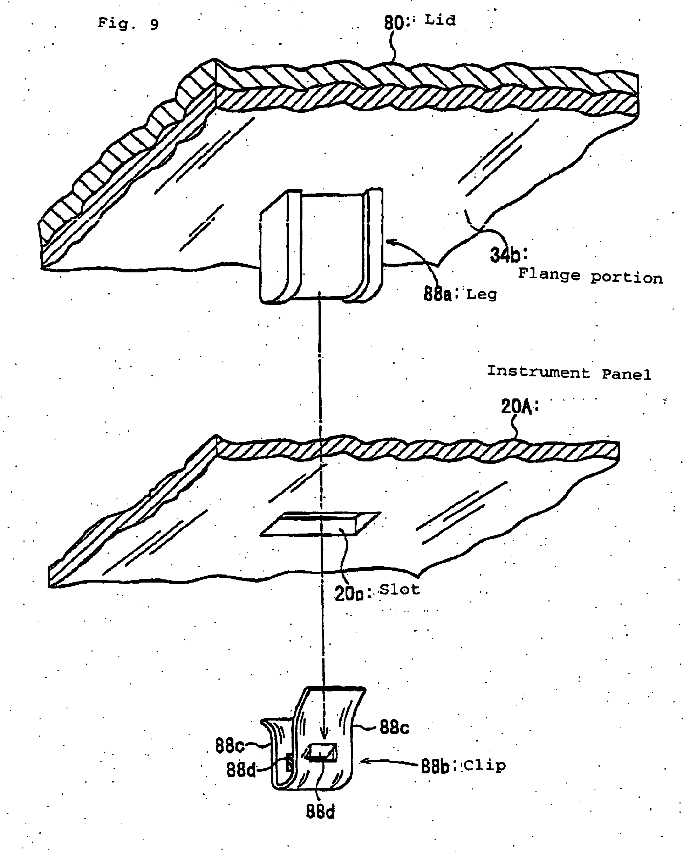

Fig. 7 is a sectional view of an airbag device according to another embodiment, Fig. 8 is a sectional view of the airbag device in operation, and Fig. 9 is an exploded perspective view of a connecting portion between a lid of the airbag device and an instrument panel 20A.

In this embodiment, the upper side of a retainer 10 is covered by a lid 80. The lid 80 is also provided with tear lines 82a, 82b, consisting of grooves. The tear line 82b is formed along the upper periphery of the retainer 10 to extend round. A portion surrounded by this round tear line 82b is a door portion 84. The tear line 82a is formed to extend the middle of the door portion 84 longitudinally. A portion outside of the door portion 84 (hereinafter, simply referred to as "peripheral portion") of the lid 80 overhangs outwardly from the upper peripheral edge of the retainer 10.

On the back of the lid 80, a door frame fixed member 34 is disposed to surround the door portion 84 and a door frame movable member 32 is fitted slidably on the inner surface of the door frame fixed member 34. The door frame fixed member 34 has a flange portion 34b which is bonded to the peripheral portion of the lid 80 by vibration welding (hereinafter, sometimes, the peripheral portion of the lid 80 and the flange portion 34b will be collectively referred to as "the peripheral portion of the lid 80"). The door frame movable member 32 has backing plates 32a, 32a which are bonded to the back of the door portion 84 by vibration welding.

In this embodiment, the flange portion 34b is provided with connecters 86, 88 for connecting the door frame fixed member 34 to the instrument panel 20A. The connecter 86 is a hook-like member comprising a leg 86a downwardly extending from the back of the flange portion 34b and a projection 86b projecting outwardly (in a direction opposite to the direction toward the center of the lid 80) from an end portion of the leg 86a. The connecter 88 comprises a leg 88a downwardly extending from the back of the flange portion 34b and a clip 88b to be attached to a lower portion of the leg 88a.

As shown in Fig. 9, the leg 88a is in the form of flat plate and the clip 88b is substantially U-like shape so that the clip 88b clips the leg 88a from beneath. As shown in Fig. 9, the clip 88b is provided with claws 88d, 88d which project from the inner surfaces of a pair of opposite sides 88c, 88c to be superposed on the both side surfaces of the leg 88a. The claws 88d, 88d bite into the leg's side surfaces to prevent the clip 88b from coming off. The upper end portions of the opposite sides 88c, 88c are curved to expand in a direction apart from each other so that the distance between the upper ends is larger than the width of a slot 20c as will be described.

In this embodiment, the flange portion 34b is provided with the plural connecters 86 disposed along the front-side edge (the left-side edge as is seen in Figs. 7 and 8, i.e. the passenger side edge) of the lid 80 and with the plural connectors 88 along the rear-side edge (the right-side edge as is seen in Figs. 7 and 8).

In this embodiment, the instrument panel 20A is provided with an opening 20a for mounting the airbag device. The instrument panel 20A is also provided with slots 20b, 20c for the connectors 86, 88, formed along the front-side edge and the rear-side edge of the opening 20a, respectively. The retainer 10 is arranged in the opening 20a and the lid 80 covers the opening 20a. The peripheral portion of the lid 80 is superposed on the peripheral portion around the opening 20a and the connectors 86, 88 are engaged with the slots 20b, 20c.

Formed at the peripheral portion around the opening 20a is a lower stepped portion (without numeral) which is lower than the other portion. The peripheral portion of the lid 80 (and the flange portion 34b) is superposed on the lower stepped portion so that the upper surface of the lid 80 is flush with the upper surface of the instrument panel 20A around the lower stepped portion.

For mounting the lid 80 to the opening 20a, first the connectors 86 at the front side of the lid 80 are inserted into the slots 20b and the projections 86b are hooked by the lower sides of the slots 20b. Then, the rear side portion of the lid 80 is swung downwardly about the engaged portions between the connectors 86 and the slots 20b as pivots so that the legs 88a of the connectors 88 are inserted into the slots 20c. During this, the peripheral portion of the lid 80 is fitted to the lower stepped portion around the opening 20a. After that, the clips 88b are pressed from the behind the instrument panel 20A to cover the legs 88a so that the upper portions of the opposite sides 88c, 88c of each clip 88b are brought in contact with the lower portions around the slots 20c. Therefore, the legs 88a are prevented from coming off the slots 20c, whereby the peripheral portion of the lid 80 is connected to the peripheral portion around the opening 20a.

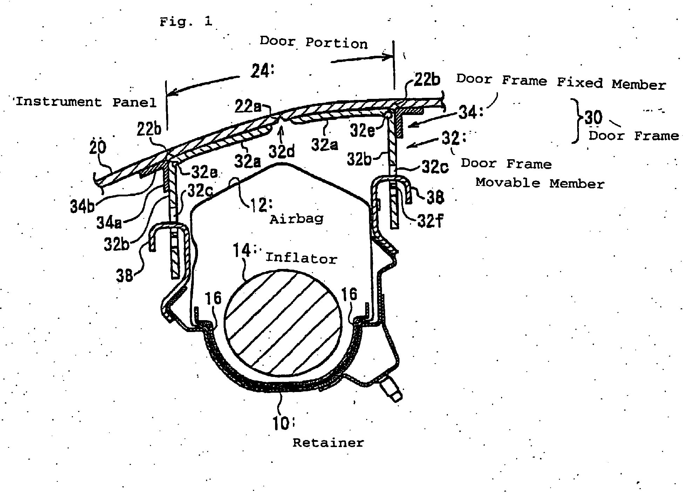

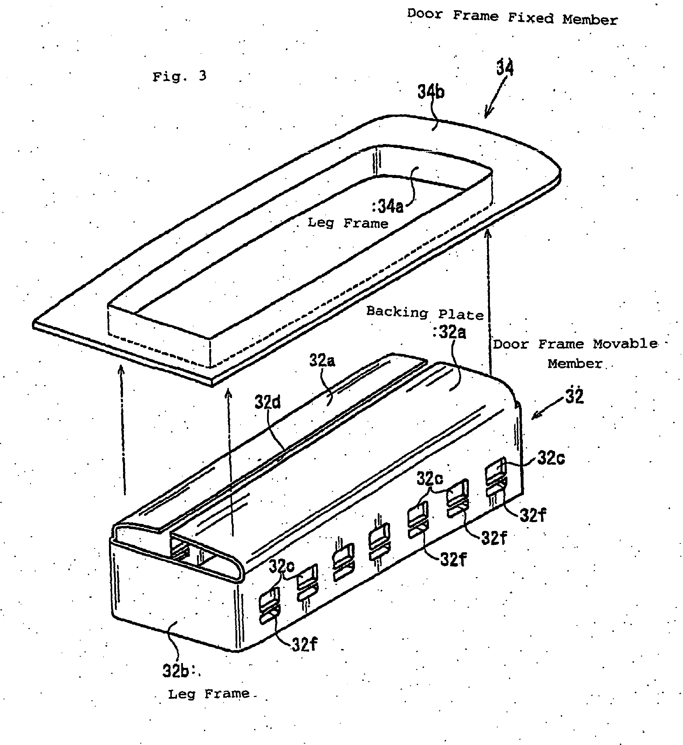

The other structure of the airbag device is the same as the airbag device shown in Fig. 1 through Fig. 3. The same numerals as the numerals used in the former embodiment designate the same parts.

In the airbag device having the aforementioned structure, as the inflator 14 starts its gas spouting action, the door frame movable member 32 is upwardly pressed by the airbag 12 being inflated so as to upwardly move and thus upwardly press the door portion 84 as shown in Fig. 8. By this pressing action, the lid 80 is torn along the tear line 82b so that the door portion 84 is separated from the lid 80 around the door portion 84 and moves upwardly together with the door frame movable member 32. The door portion 84 is further pressed by the airbag 12, whereby the door portion 84 is torn along the tear line 82a. Therefore, the door portion 84 and the backing plates 32a, 32a are divided into two pieces in the rightward and leftward directions, as is seen in Fig. 8, so as to open just like a door, whereby the airbag 12 is inflated into the vehicle cabin.

Also in this airbag device, since the door portion 84 is separated from the lid 80 around the door portion 84 by means of the lifting motion of the door portion 84, the door portion 84 smoothly open without being subjected to reaction force due to deformation of the lid 80 around the door portion 84.

In this airbag device, the flange portion 34b of the door frame fixed member 34 bonded to the peripheral portion of the lid 80 is connected to the instrument panel 20A by means of the connectors 86, 88 and is thus restrained from moving toward the inside of the vehicle cabin. Therefore, even when the door portion 84 is pressed upwardly by the door frame movable member 32, the lid 80 per se does not float from the instrument panel 20A. Thus, pressing force from the door frame movable member 32 is concentrated on the door portion 84, whereby the door portion 84 is smoothly separated from the peripheral portion of the lid 80.

## Claims

1. An airbag device comprising:
an interior panel as a part of the inner surface of a vehicle cabin;
a door portion (24) which is formed in the interior panel (20) and can open like a door toward the inner side of the vehicle cabin;
a retainer (10) which is disposed to face the back of the interior panel;
an airbag (12) which is folded and accommodated in the retainer (10);
an inflator (14) for inflating the airbag (12); and
a door frame (30) connecting the retainer (10) and the interior panel (20), wherein the door frame (30) comprises:
a door frame movable member (32) which has a backing plate (32a) bonded to the back of said door portion and a leg portion (32b) projecting from side edge of the backing plate (32a); and
a door frame fixed member (34) which has a flange portion (34b) bonded to a peripheral portion around the door portion of the interior panel and a leg portion (34a) projecting from the flange portion, **characterized in that**
the height of the leg portion (34a) of the door frame fixed member (34) is smaller than the height of the leg portion (32b) of the door frame movable member (32).

2. An airbag device as claimed in claim 1, wherein the leg portion of said door frame movable member is provided with hook holes and said retainer is provided with hooks which are engaged with the hook holes, and
the height of the leg portion of said door frame fixed member does not reach the hook holes.

3. An airbag device as claimed in claim 1 or 2, wherein said interior panel is an instrument panel.

4. An airbag device as claimed in claim 1, 2 or 3, wherein said interior panel is a lid of the airbag device, said door frame fixed member is provided with connectors for connecting the door frame fixed member to an instrument panel around the lid, and said connectors restrain the door frame fixed member from moving toward the inner side of the vehicle cabin.

## Patentansprüche

1. Airbagvorrichtung mit:
einer Innenplatte als ein Teil der Innenfläche der Fahrzeugkabine;
einem Türabschnitt (24), der in der Innenplatte (20) ausgebildet ist und wie eine Tür zur Innenseite der Fahrzeugkabine geöffnet werden kann;
einer Aufnahme (10), die zur Rückseite der Innenplatte weisend angeordnet ist;
einem Airbag (12), der gefaltet und in der Aufnahme (10) untergebracht ist;
einem Gasgenerator (14) zum Aufblasen des Airbags (12); und
einem Türrahmen (30) zum Verbinden der Aufnahme (10) mit der Innenplatte (20),
wobei der Türrahmen (30) aufweist:
ein bewegliches Türrahmenelement (32), das eine Rückplatte (32a), die mit der Rückseite des Türabschnitts verbunden ist, und einen Beinabschnitt (32b) aufweist, der von der Seitenkante der Rückplatte (32a) vorsteht; und
ein feststehendes Türrahmenelement (34), das einen Flanschabschnitt (34b), der mit einem Umfangsabschnitt um den Türabschnitt der Innenplatte verbunden ist, und einen Beinabschnitt (34a) aufweist, der von dem Flanschabschnitt vorsteht,
**dadurch gekennzeichnet, dass** die Höhe des Beinabschnitts (34a) des feststehenden Türrahmenelements (34) kleiner ist als die Höhe des Beinabschnitts (32b) des beweglichen Türrahmenelements (32).

2. Airbagvorrichtung nach Anspruch 1, wobei der Beinabschnitt des beweglichen Türrahmenelements Hakenlöcher und die Aufnahme Haken aufweist, die mit den Hakenlöchern in Eingriff sind, und die Höhe des Beinabschnitts des feststehenden Türrahmenelements nicht an die Hakenlöcher heranreicht.

3. Airbagvorrichtung nach Anspruch 1 oder 2, wobei die Innenplatte ein Armaturenbrett ist.

4. Airbagvorrichtung nach Anspruch 1, 2 oder 3, wobei die Innenplatte ein Deckel der Airbagvorrichtung ist, das feststehende Türrahmenelement Verbinder zum Verbinden des feststehenden Türrahmenelements mit einem Armaturenbrett um den Deckel aufweist, und die Verbinder die Bewegung des feststehenden Türrahmenelements in Richtung der Innenseite der Fahrzeugkabine beschränken.

## Revendications

1. Dispositif de coussin de sécurité gonflable, comprenant :
◆ un panneau intérieur en tant que partie de la surface interne d'un habitacle de véhicule ;
◆ une partie de porte (24) qui est formée dans le panneau intérieur (20) et qui peut s'ouvrir comme une porte vers le côté interne de l'habitacle de véhicule ;
◆ un dispositif de retenue (10) qui est disposé de manière à être orienté vers l'arrière du panneau intérieur ;
◆ un coussin de sécurité gonflable (12) qui est plié et logé dans le dispositif de retenue (10) ;
◆ un gonfleur (14) apte à gonfler le coussin de sécurité gonflable (12) ; et
◆ un cadre de porte (30) reliant le dispositif de retenue (10) et le panneau intérieur (20), dans lequel le cadre de porte (30) comprend :
◆ un élément mobile de cadre de porte (32) qui a une plaque arrière (32a) assemblée sur l'arrière de ladite partie de porte et une partie de patte (32b) faisant saillie depuis le bord latéral de la plaque arrière (32a); et
◆ un élément fixe de cadre de porte (34) qui a une partie formant bride (34b) assemblée sur une partie périphérique autour de la partie de porte du panneau intérieur et une partie de patte (34a) faisant saillie depuis la partie formant bride, **caractérisé en ce que**
◆ la hauteur de la partie de patte (34a) de l'élément fixe de cadre de porte (34) est inférieure à la hauteur de la partie de patte (32b) de l'élément mobile de cadre de porte (32).

2. Dispositif de coussin de sécurité gonflable selon la revendication 1, dans lequel la partie de patte dudit élément mobile de cadre de porte est munie de trous à crochet et ledit dispositif de retenue est muni de crochets qui sont engagés dans les trous à crochet, et la hauteur de la partie de patte dudit élément fixe de cadre de porte n'atteint pas les trous à crochet.

3. Dispositif de coussin de sécurité gonflable selon la revendication 1 ou 2, dans lequel ledit panneau intérieur est un tableau de bord.

4. Dispositif de coussin de sécurité gonflable selon la revendication 1, 2 ou 3, dans lequel ledit panneau intérieur est un couvercle du dispositif de coussin de sécurité gonflable, ledit élément fixe de cadre de porte est muni de connecteurs pour relier l'élément fixe de cadre de porte à un tableau de bord autour du couvercle, et lesdits connecteurs empêchent l'élément fixe de cadre de porte de se déplacer vers le côté interne de l'habitacle de véhicule.
